# FASCICULE DE BREVET EUROPEEN

(11) **EP 0 695 979 B1**
(45) Date de publication et mention de la délivrance du brevet: **14.01.1998**
(21) Numéro de dépôt: 95111643.3
(22) Date de dépôt: 25.07.1995
(51) Int. Cl.: G04G 1/00, G06K 9/22

(54) **Dispositif d'identification d'un caractère transcrit sur une surface et procédé d'identification d'un tel caractère, notamment pour une montre**
Vorrichtung zum Erkennen eines auf einer Oberfläche geschriebenen Buchstaben und Verfahren zum Erkennen eines solchen Buchstaben, insbesondere für eine Uhr
Means to recognise ce character written on a surface and recognition method for such a character, in particular for a watch

(30) Priorité: 02.08.1994 CH 2422/94
(43) Date de publication de la demande: 07.02.1996
(73) Titulaire: ASULAB S.A., CH-2501 Bienne (CH)
(72) Inventeur: Nguyen, Thien Kiem, CH-1422 Les Tuileries-de-Grandson (CH)
(74) Mandataire: Patry, Didier Marcel Pierre

(56) Documents cités:
- US-A- 4 953 226
- MESURES REGULATION AUTOMATISME, vol. 42, no. 9, Septembre 1977 PARIS, pages 69-73, C. PIGUET ET AL 'Entrée de données pour montre fonctionelle'

## Description

La présente invention est relative à un dispositif d'identification d'un caractère transcrit par un instrument d'écriture sur une surface, ledit dispositif comprenant une pluralité de capteurs, chacun d'eux produisant un signal de sortie ayant, soit un premier état, soit un deuxième état selon respectivement l'absence ou la présence dudit instrument d'écriture dans une zone discrète de ladite surface, des moyens pour détecter, périodiquement lors de la transcription dudit caractère, l'état desdits signaux de sortie, et des moyens pour déterminer lesquels parmi lesdits signaux de sortie se trouvent dans ledit deuxième état à chaque détection d'état.

La présente invention concerne également un procédé d'identification d'un caractère transcrit par un instrument d'écriture sur une surface à l'aide une pluralité de capteurs, chacun d'eux produisant un signal de sortie ayant, soit un premier état, soit un deuxième état selon respectivement l'absence ou la présence dudit instrument d'écriture dans une zone discrète de ladite surface, ledit procédé comprenant les étapes de :
- lors de la transcription dudit caractère, détecter périodiquement l'état desdits signaux de sortie; et
- à chaque détection d'état, déterminer lesquels parmi lesdits signaux de sortie se trouvent dans ledit deuxième état.

Un tel dispositif et un tel procédé d'identification ont déjà été décrits dans les documents EP-A-0 165 548, ou US-A-4 953 226, ou MESURES REGULATION AUTOMATISME, vol. 42, no.9 (Sept. 1977, Paris), p. 69-73, C. PIGUET et al.. Ces documents, et notamment le premier, décrit une montre électronique comprenant un dispositif de reconnaissance de caractères écrits à la main sur le verre de la montre. Une matrice de capteurs photoélectriques est agencée sur la surface inférieure du verre. Lorsqu'un utilisateur transcrit un caractère sur la surface supérieure du verre, l'intensité de la lumière détectée par les capteurs photoélectriques est changée et permet ainsi la détection des coordonnées du caractère transcrit.

Le caractère écrit est ensuite reconnu d'après les coordonnées ainsi détectées. Pour ce faire, les coordonnées respectives des premier, deuxième et troisième traits du caractère écrit sont stockées successivement dans des zones de mémoire différentes. Après que le temps prédéterminé pour inscrire le caractère a expiré, les données représentant les coordonnés du caractère qui sont stockées dans les trois zones de mémoire sont respectivement comparées aux données des caractères de référence. Le caractère de référence dont les données sont les plus similaires aux données du caractère transcrit est considéré comme étant ce dernier.

Bien que cette manière d'identification soit prévue pour une utilisation dans une montre électronique, on comprendra qu'elle impose un certain nombre d'exigences sur la montre. D'une part, la comparaison entre les données du caractère transcrit et celles des caractères de références nécessite un traitement de données très détaillé. Il en résulte une charge supplémentaire élevée sur la pile qui alimente la montre, ce qui diminue considérablement son autonomie. D'autre part, une mémoire importante capable de stocker toutes les données qui correspondent au caractère transcrit et aux caractères de référence est nécessaire pour effectuer cette comparaison. Une telle mémoire et la gestion des données stockées dans celle-ci impliquent non seulement une consommation d'énergie supplémentaire élevée, mais également un ralentissement des fonctions horaires normales du circuit garde-temps de la montre pendant que ces données sont traitées.

La présente invention a pour but de fournir un dispositif et un procédé d'identification d'un caractère transcrit sur une surface qui remédient, tout au moins en partie, aux inconvénients de l'art antérieur.

Un autre but de la présente invention est un dispositif et un procédé d'identification d'un caractère transcrit sur une surface qui soient simples et efficaces, qui présentent une haute fiabilité, qui utilisent peu d'énergie et qui conviennent mieux à une utilisation dans une montre électronique que les dispositifs et les procédés de l'art antérieur.

L'invention a ainsi pour objet un dispositif d'identification d'un caractère transcrit par un instrument d'écriture sur une surface, ledit dispositif comprenant :
- une pluralité de capteurs chacun d'eux produisant un signal de sortie ayant, soit un premier état, soit un deuxième état selon respectivement l'absence ou la présence dudit instrument d'écriture dans une zone discrète de ladite surface;
- des moyens pour détecter, périodiquement lors de la transcription dudit caractère, l'état desdits signaux de sortie; et
- des moyens pour déterminer lesquels parmi lesdits signaux de sortie se trouvent dans ledit deuxième état à chaque détection d'état; ledit dispositif étant caractérisé en ce qu'il comprend en outre :
- des moyens pour comparer chacun desdits signaux de sortie se trouvant dans ledit deuxième état au signal de sortie qui avait été produit par le même capteur lors de la détection d'état précédente;
- des moyens pour enregistrer, selon un ordre prédéterminé desdits capteurs, un identificateur correspondant aux capteurs pour lesquels un changement d'état a ainsi été détecté, lesdits identificateurs enregistrés formant ainsi une série d'identificateurs correspondant audit caractère transcrit; et
- des moyens pour comparer ladite série d'identificateurs enregistrée à au moins une série d'identificateurs de référence afin d'identifier ledit caractère transcrit.

L'invention a également pour objet un procédé d'identification d'un caractère transcrit par un instrument d'écriture sur une surface, à l'aide d'une pluralité de capteurs, chacun d'eux produisant un signal de sortie ayant, soit un premier état, soit un deuxième état selon respectivement l'absence ou la présence dudit instrument d'écriture dans une zone discrète de ladite surface, ledit procédé comprenant les étapes de :
- lors de la transcription dudit caractère, détecter périodiquement l'état desdits signaux de sortie; et
- à chaque détection de l'état, déterminer lesquels parmi lesdits signaux de sortie se trouvent dans ledit deuxième état;
   ledit procédé étant caractérisé en ce qu'il comprend en outre les étapes de :
- comparer chacun desdits signaux de sortie se trouvant dans ledit deuxième état au signal de sortie produit par le même capteur à la détection d'état précédente;
- enregistrer, selon un ordre prédéterminé desdits capteurs, un identificateur correspondant aux capteurs pour lesquels un changement d'état a ainsi été détecté, lesdits identificateurs enregistrés formant ainsi une série d'identificateurs correspondant audit caractère transcrit; et
- comparer ladite série d'identificateurs enregistrés à au moins une série d'identificateurs de référence afin d'identifier ledit caractère transcrit.

Grâce à ces caractéristiques, on simplifie les données correspondant au caractère transcrit et les données correspondant aux caractères de référence que l'on doit, d'abord, stocker et, par la suite, traiter pour identifier le caractère transcrit. Par conséquent, on obtient un dispositif et un procédé d'identification qui représentent une amélioration par rapport aux dispositifs et aux procédés actuels.

D'autres caractéristiques et avantages de l'invention apparaîtront au cours de la description qui va suivre, donnée uniquement à titre d'exemple et faite en se référant aux dessins annexés dans lesquels :
- la figure 1 est une vue en coupe d'une montre comportant un dispositif d'identification selon la présente invention;
- la figure 2 est un schéma du dispositif d'identification de la figure 1;
- la figure 3 est un schéma de l'agencement spatial des capteurs capacitifs du dispositif d'identification de la figure 2;
- la figure 4 est la représentation d'un exemple d'une trajectoire suivie en inscrivant un caractère sur le verre de la montre de la figure 1;
- la figure 5 est un tableau représentant les éléments binaires formant le mot binaire provenant de la série de détecteurs de fréquence du dispositif d'identification de la figure 2;
- la figure 6 est un organigramme d'un procédé d'identification selon la présente invention;
- la figure 7 est un tableau représentant les capteurs capacitifs faisant partie du dispositif d'identification de la figure 2 qui sont activés aux instants d'échantillonnage lors de l'inscription du caractère de la figure 4; et,
- la figure 8 est un tableau représentant les identificateurs produits aux instants d'échantillonnage lors du procédé de la figure 6.

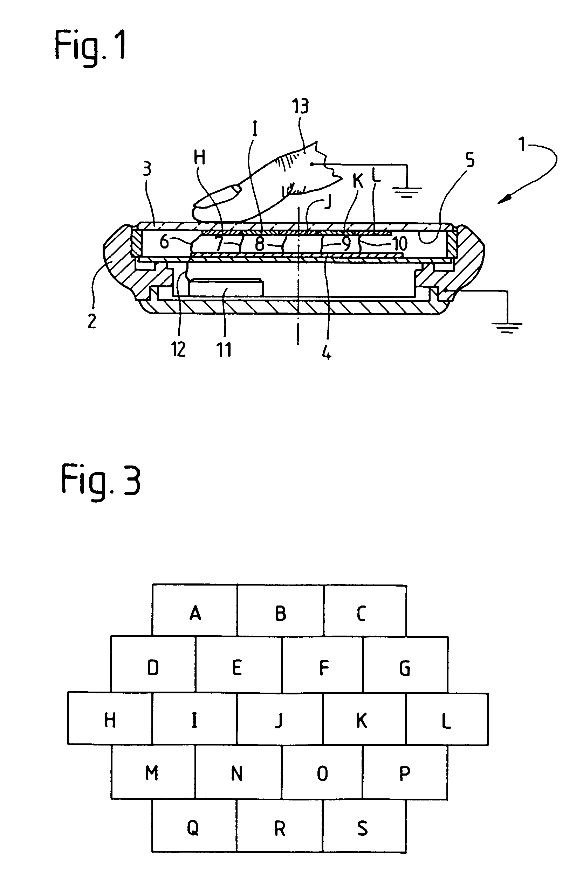

La figure 1 représente une vue en coupe d'une montre 1 comportant un boîtier 2 et un verre 3. Un circuit électronique 4 est disposé dans le boîtier 2. Des électrodes conductrices, de préférence transparentes, sont disposées sur la face intérieure 5 du verre 3, seules cinq de ces électrodes, référencées respectivement H, I, J, K et L ayant été représentées sur la figure 1. Les électrodes H à L sont respectivement reliées au circuit électronique 4 par des conducteurs 6, 7, 8, 9 et 10. Une pile 11 ou une autre source d'énergie électrique est également disposée dans le boîtier 2 et est reliée au pôle positif du circuit électronique 4 par un conducteur 12.

Chacune des électrodes H à L forme l'une des armatures d'une série de capteurs capacitifs, l'autre armature de chacun de ces capteurs capacitifs étant formée par le doigt 13 du porteur de la montre 1 lorsqu'il touche la face extérieure du verre 3 en face d'une électrode particulière. Le doigt 13 du porteur est relié à la masse du circuit électronique 4 par l'intermédiaire du boîtier 2 qui est en contact avec le poignet de celui-ci et qui est relié respectivement aux pôles négatifs du circuit électronique 4 et de la pile 11.

On notera à ce propos qu'une capacité parasite est, par construction, présente entre chacune des électrodes H à L et le boîtier 2 de la montre 1. Chacun des capteurs capacitifs, dont les électrodes H à L font partie, et le condensateur parasite associé à ce capteur capacitif sont branchés en parallèle entre la masse et une entrée du circuit électronique 4.

Le circuit électronique 4 comprend une série d'oscillateurs commandés en tension, la fréquence de chacun de ces oscillateurs variant en fonction de la capacité totale présente entre son entrée et la masse. Si le doigt 13 du porteur de la montre 1 n'est pas posé sur le verre 3 en face d'une électrode particulière, une des armatures du capteur capacitif correspondant n'est par conséquent pas formée. Dans ce cas, la capacité totale présente entre l'entrée et la masse de l'oscillateur est équivalente à la capacité du condensateur parasite. Par contre, lorsque le doigt 13 est posé sur le verre 3 en face de cette électrode, les deux armatures du capteur capacitif correspondant sont formées. La capacité totale entre l'entrée et la masse de l'oscillateur est maintenant équivalente à la somme de la capacité du capteur capacitif et de la capacité du capteur parasite.

Ainsi, la fréquence d'oscillation de chacun des oscillateurs commandés en tension varie en fonction de la présence ou de l'absence du doigt 13 sur la partie du verre 3 qui est en face de l'électrode associée avec cet oscillateur.

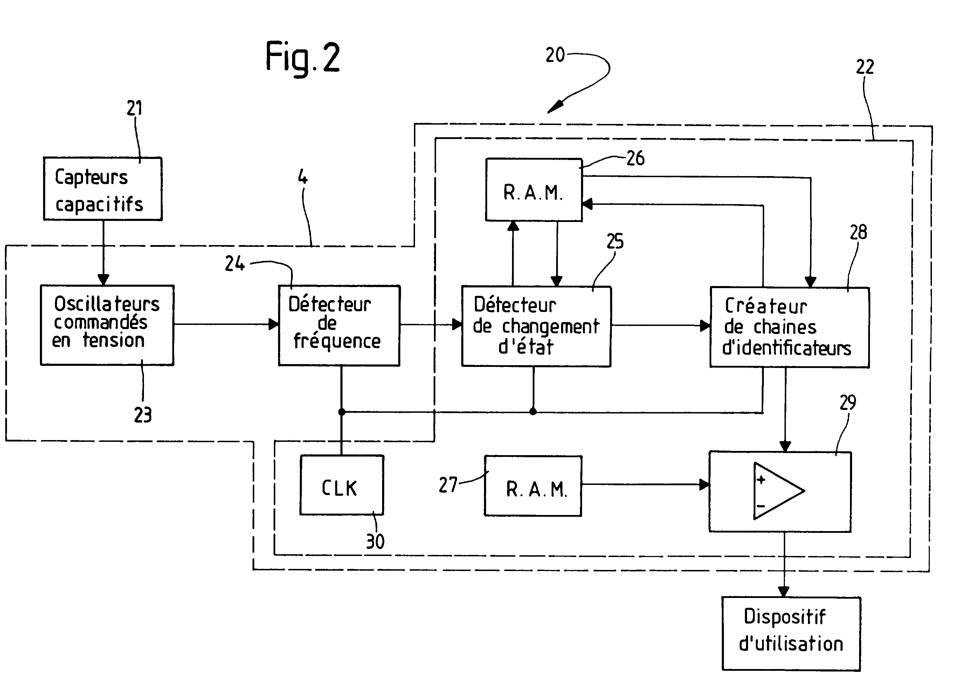

La figure 2 montre un dispositif d'identification 20 d'un caractère transcrit sur le verre 3 de la montre 1. Le dispositif d'identification 20 comprend une série de capteurs capacitifs 21, comprenant les électrodes H à L de la figure 1, et le circuit électronique 4. Le circuit électronique 4 comprend un circuit de commande 22, une série d'oscillateurs commandés en tension 23 et une série de détecteurs de fréquence 24.

Le circuit de commande 22 comprend un détecteur de changement d'état 25, des unités de mémoire vive (RAM) 26 et 27, un créateur de chaînes d'identificateurs 28, un comparateur de chaînes d'identificateurs 29 et un circuit d'horloge 30. Le fonctionnement des détecteurs de fréquence, du détecteur de changement d'état 25 et du créateur de chaînes d'identification 28 sont tous commandés à une cadence déterminée par la fréquence des impulsions d'horloge provenant du circuit d'horloge 30. Le circuit de commande 22 peut être réalisé en utilisant un micro-ordinateur quelconque. La programmation d'un tel micro-ordinateur pour réaliser ce circuit, à partir de la description ci-dessous, est bien connue de l'homme du métier et elle ne sera par conséquent pas décrite en détail.

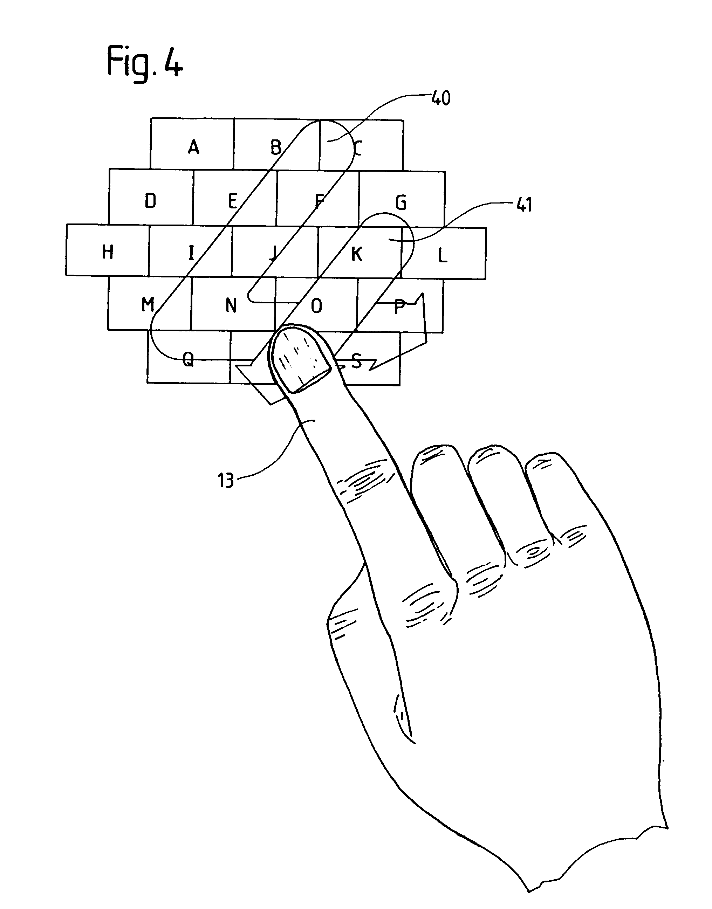

La série de capteurs capacitifs 21 comporte des électrodes référencées A à S, agencées sur la surface inférieure 5 du verre 3, selon une disposition spatiale représentée à la figure 3. Lorsque le porteur de la montre 1 pose, par exemple, son doigt sur le verre 3 en face de l'électrode "C" un capteur capacitif correspondant est formé et par conséquent la capacité totale présente à l'entrée de l'oscillateur commandé en tension associé à ce capteur capacitif est modifiée. Il en résulte que la fréquence du signal de sortie de cet oscillateur commandé en tension est également modifiée, ce changement de fréquence étant détecté par le détecteur de fréquence associé à cet oscillateur commandé en tension.

En outre, chaque détecteur de fréquence compare la fréquence du signal de sortie de l'oscillateur commandé en tension auquel il est associé à une valeur de référence prédéterminée. Cette valeur de référence est définie de manière que la détection d'une fréquence inférieure à cette valeur correspond à l'absence d'un doigt sur le verre 3 en face d'une électrode particulière, tandis que la détection d'une fréquence supérieure à cette valeur correspond à la présence d'un doigt sur le verre 3 en face de cette électrode. Ainsi, le signal de sortie de chaque détecteur de fréquence, a soit un état haut, soit un état bas selon qu'un doigt est posé ou non sur le verre 3 de la montre 1 en face de l'électrode correspondante.

Il en résulte que les signaux de sortie de la série de détecteurs de fréquence 24 forment un mot binaire dont les éléments binaires sont représentatifs des états de ces signaux de sortie. Chaque détecteur de fréquence échantillonne le signal de sortie de l'oscillateur commandé en tension avec lequel il est relié, à une cadence réglée par le circuit d'horloge 24. Ainsi, un nouveau mot binaire dont chaque élément binaire représente la présence ou l'absence du doigt d'un porteur de la montre 1 sur le verre 3 en face d'une des électrodes A à S, est également engendré à cette cadence.

Le détecteur de changement d'état 25 est relié à la série de détecteurs de fréquence 24 de sorte qu'il reçoit les mots binaires qui proviennent de la série de détecteurs de fréquence 24. Le détecteur de changement d'état 25 stocke temporairement chaque mot binaire qu'il reçoit dans la mémoire RAM 26. Dans le présent exemple, lorsqu'un mot binaire est reçu à son entrée, le détecteur de changement d'état 25 détermine d'abord lesquels des éléments binaires formant ce mot sont dans l'état haut indiquant ainsi la présence d'un doigt sur le verre 3 de la montre 1 en face de l'électrode correspondante.

Ensuite, le détecteur 25 compare chacun de ses éléments binaires étant dans l'état haut avec l'élément binaire correspondant du mot précédent stocké dans la mémoire RAM 26. Dans le cas d'une différence d'état entre ces éléments binaires, c'est-à-dire dans le cas où un élément binaire est dans l'état haut tandis que l'élément binaire correspondant du mot précèdent est dans l'état bas, le détecteur 25 fournit au créateur de chaînes d'identificateurs 28 un signal qui identifie le capteur capacitif correspondant à cet élément binaire. Ce signal peut être, par exemple, une adresse identifiant l'une des électrodes A à S qui correspond à ce capteur capacitif.

Par conséquent, le créateur de chaînes d'identification 28 reçoit périodiquement pendant l'inscription d'un caractère écrit sur le verre 3, et à une cadence déterminée par la fréquence des impulsions provenant du circuit d'horloge 30, un groupe de signaux indiquant quels sont les capteurs capacitifs qui sont "activés" par le doigt 13 à chaque impulsion du circuit horloge 30. Les indicateurs formant chaque groupe sont stockés les uns après les autres par le créateur de chaînes d'identification 28 dans RAM 26 selon un ordre correspondant à un ordre prédéterminé des capteurs A à S.

Les groupes d'indicateurs qui sont créés lors des impulsions successives du circuit d'horloge 30 sont également stockés, les uns après les autres, par le créateur de chaînes d'identification dans la mémoire RAM 26. Une série ou chaîne d'identificateurs qui identifie un caractère écrit particulier est ainsi crée lors de l'inscription de ce caractère sur le verre 3.

Ensuite, le comparateur 29 compare cette chaîne d'identificateurs à des séries de chaînes d'identificateurs de référence stockées dans la mémoire RAM 27. Chacune de ces chaînes d'identificateurs de référence correspond à un caractère destiné à être écrit par l'utilisateur sur le verre 3 et qui est ensuite traité par un dispositif d'utilisation faisant partie de la montre 1. Le dispositif d'utilisation pourrait être, par exemple, une calculatrice ou un autre dispositif qui reconnait des chiffres et/ou des caractères. Si le chaîne d'identificateurs engendrée par l'écriture d'un caractère par l'utilisateur ne diffère d'une des chaînes d'identificateurs de référence que par moins d'un nombre prédéterminé d'identificateurs, le comparateur 29 fournit un signal représentatif du caractère correspondant à cette chaîne d'identificateurs de référence au dispositif d'utilisation.

Le fonctionnement du dispositif d'identification 20 va maintenant être décrit en se référant aux figures 4 à 8. La figure 4 montre la disposition des capteurs A à S de la figure 3 sur laquelle, à titre d'exemple, le tracé de la trajectoire du doigt 13 par la transcription du chiffre 4 a été symbolisé par des flèches 40, 41. En suivant cette trajectoire, on voit que le doigt 13 est d'abord positionné en face des électrodes B et C des capteurs.

Dans ces conditions, les capacités totales présente à l'entrée des oscillateurs commandés en tension associés avec les électrodes B et C sont modifiées. Le changement de fréquence de ces deux oscillateurs commandés en tension est détecté par les détecteurs de fréquence associés à ces oscillateurs. Ainsi, le signal de sortie de chacun de ces détecteurs de fréquence est dans l'état haut tandis que les signaux de sortie provenant des autres détecteurs de fréquence, associés aux électrodes A et D à S, sont tous dans l'état bas.

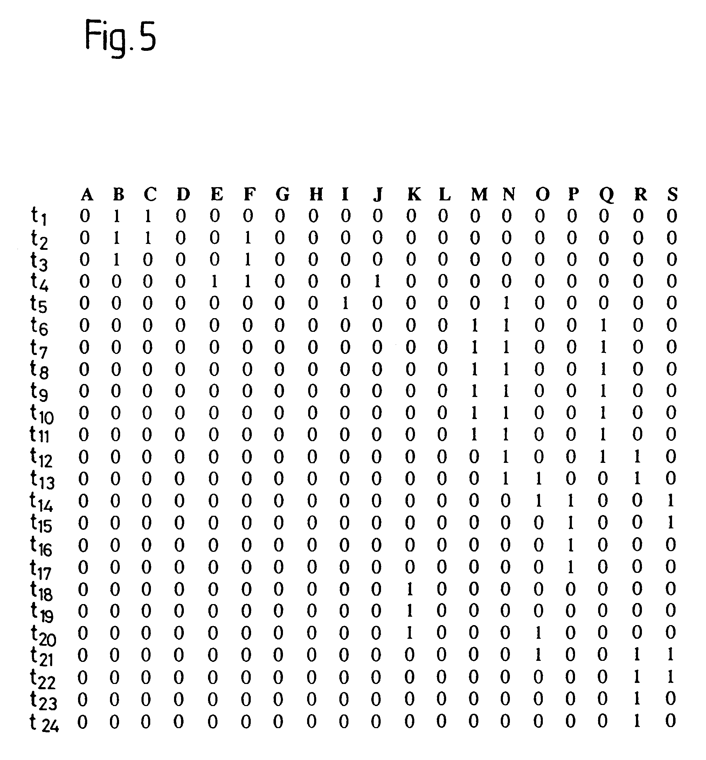

La figure 5 est un tableau qui montre l'état des signaux provenant des détecteurs de fréquence associés aux électrodes A à S aux instants d'échantillonnage t₁ à t₂₄ lors de l'écriture du chiffre "4" le long des trajectoires 40 et 41 de la figure 4. On voit sur la figure 5 que les états hauts sont représentés par des "1" tandis que les états bas sont représentés par des "0". Il en résulte que le mot binaire fournit au détecteur d'état à l'instant t₁ a la valeur 0110000000000000000.

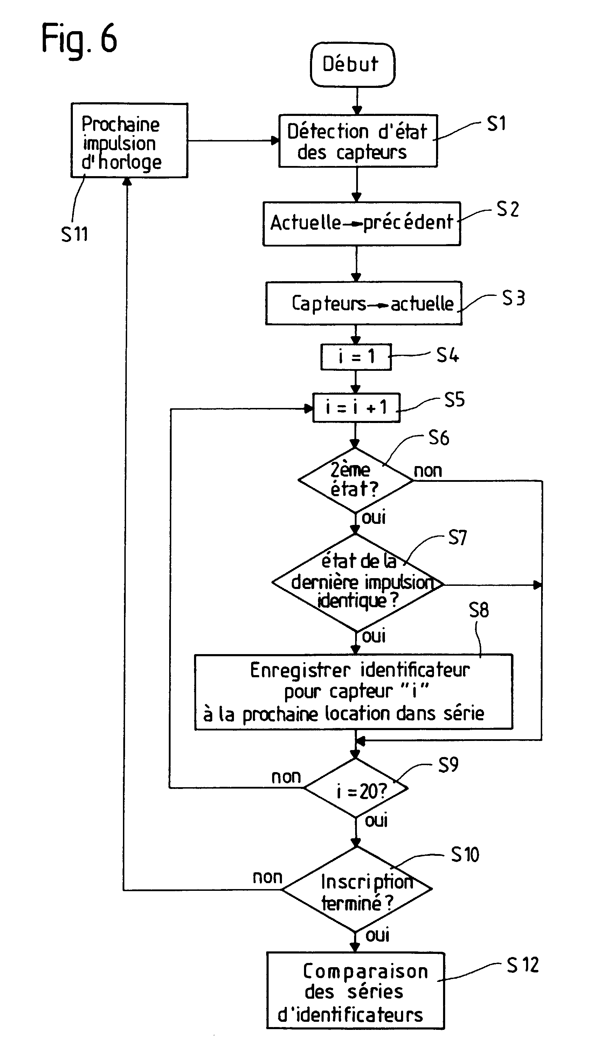

La figure 6 est un organigramme à l'aide duquel les diverses étapes du fonctionnement pendant l'inscription et l'identification du caractère montré à la figure 4 du dispositif d'identification 20 vont maintenant être expliqués. L'étape S1 correspond à l'étape de détection de l'état des capteurs capacitifs qui vient d'être décrite.

La mémoire RAM 26 comporte une adresse à laquelle est stocké le mot binaire fournit par la série de détecteurs de fréquence 24 à un instant d'échantillonnage particulier. La mémoire RAM 26 comporte en outre une autre adresse à laquelle est stocké le mot binaire fournit par la série de détecteurs de fréquence 24 à l'instant d'échantillonnage précédent. On appellera ces deux mots binaires respectivement le mot binaire "actuel" et le mot binaire "précédent". A l'étape S2, le contenu de l'adresse à laquelle est stocké le mot binaire précédent est remplacé par le contenu de l'adresse à laquelle est stocké le mot binaire actuel. Avant que l'inscription du chiffre que l'on souhaite n'ait commencé, ces mots binaires ont tous les deux la valeur 0000000000000000000. Ensuite, à l'étape S3, le mot binaire provenant de la série de détecteurs de fréquence 24 à l'instant t₁, c'est-à-dire le mot 0110000000000000000, est écrit dans la mémoire 26 à l'adresse du mot binaire actuel.

Le détecteur de changement d'état 25 comporte un compteur qui, à l'étape S4, est initialisé avec une valeur i = 1. A la prochaine étape S5, le contenu de ce compteur est augmenté d'une unité. Les valeurs de "i" comprises entre 2 et 20 correspondent respectivement aux unités binaires associées aux électrodes A à S montrées à la figure 4.

A l'étape S6, le détecteur de changement d'état 25 examine l'état de la "i^{eme}" unité binaire qui fait partie du mot binaire actuel. Lorsque la valeur de "i" est 3, par exemple, il s'agit de l'unité binaire correspondant à l'électrode B. Si l'état de cette unité binaire est bas, on passe à l'étape S9 et, si la valeur de "i" est inférieure à 20, cette valeur est augmentée d'une unité à l'étape S5 et l'état de la prochaine unité binaire dans le mot binaire actuel est examiné.

Par contre, si l'état de la "i^{eme}" unité binaire est haut, le détecteur de changement d'état compare, à l'étape S7, l'état de cette unité binaire dans le mot binaire actuel avec l'état de la "i^{eme}" unité binaire dans le mot binaire précédent qui est stocké dans la RAM 26. S'il existe une différence entre l'état de ces unités binaires, un signal correspondant à l'électrode associée avec ces unités binaires est fourni au créateur de chaînes d'identification 28. Le créateur de chaînes d'identification 28 enregistre un signal qui identifie cette électrode dans la mémoire RAM 26. Ensuite, si la valeur de "i" est inférieure à 20, la valeur de "i" est augmentée d'une unité à l'étape S5 et l'état de la prochaine unité binaire dans le mot binaire actuel est analysé.

Les étapes S5 à S9 sont répétées jusqu'à ce que la valeur de "i" atteigne 20. En conséquence, l'état de toutes les unités binaires dans le mot binaire actuel aura été analysé.

Le procédé décrit ci-dessus est ensuite répété à chaque impulsion provenant du circuit d'horloge 30 jusqu'à ce que l'inscription du caractère par l'utilisateur sur le verre 3 soit terminée. A l'étape S10, on détecte si cette inscription est terminée en détectant, par exemple, que l'état de toutes les unités binaires du mot binaire actuel reste à l'état bas pendant un nombre de périodes d'échantillonnage prédéterminé. Si l'inscription n'est pas terminée, on attend, à l'étape S11, que l'impulsion horloge suivante soit détectée avant de recommencer les étapes S1 à S10.

Les signaux d'identification créés par le créateur de chaînes d'identification 28 lors de ce procédé sont enregistrés les uns après les autres dans la mémoire RAM 26 afin de créer une série d'identificateurs correspondant au caractère inscrit sur le verre 3 de la montre 1. Ainsi, si l'on détecte, à l'étape S10, que l'inscription du caractère par l'utilisateur est terminée, le créateur de chaînes d'identificateurs 28 fournit au comparateur 29 la série d'identificateurs qu'il vient de créer.

A l'étape S12, le comparateur 29 compare la série d'identificateurs fournie par le créateur de chaînes d'identificateurs 28 aux séries d'identificateurs de référence stockés dans la mémoire RAM 27 afin d'identifier le caractère transcrit par l'utilisateur. Dans cette comparaison, les identificateurs de la série d'identificateurs fournie par le créateur de chaînes d'identificateurs 28 sont comparés avec les identificateurs de chaque série d'identificateurs de référence. Si cette comparaison détermine qu'il y a concordance entre la série d'identificateurs fournie par le créateur de chaînes d'identificateurs 28 et une des séries d'identificateurs de référence stockés dans la mémoire RAM 27, le comparateur 29 fournit un signal représentatif du caractère identifié au dispositif d'utilisation de la montre 1. Il faut noter qu'une concordance exacte n'est pas requise pour identifier le caractère transcrit. Une certaine erreur, désignée par "distance" dans le métier, est admise pourvu que cette erreur n'excède pas une valeur maximale.

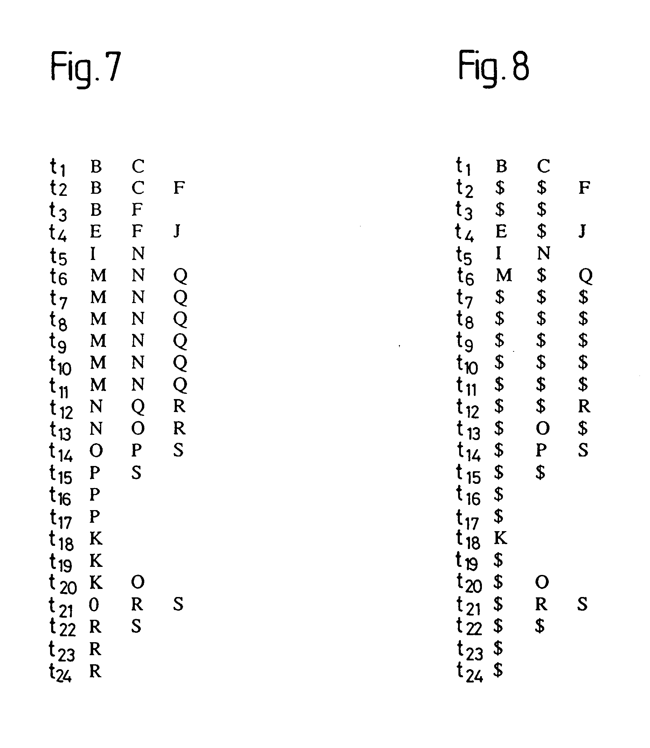

La figure 7 est un tableau qui montre, dans le cas de l'inscription du caractère dans la figure 4, les électrodes A à S pour lesquelles les unités binaires correspondantes dans le mot binaire actuel sont dans l'état haut, aux instants t₁ à t₂₄. On voit sur cette figure que les unités binaires correspondant aux électrodes B et C sont dans l'état haut à l'instant t₁, que les unités binaires correspondant aux électrodes B, C et F sont dans l'état haut à l'instant t₂, et que les unités binaires correspondant aux électrodes B et F sont dans l'état haut à l'instant t₃, etc.

Comme il a été décrit ci-dessus, le détecteur de différence d'état 25 compare, à l'étape S7, l'état des unités binaires étant dans l'état haut dans le mot binaire actuel avec l'état des unités binaires dans le mot binaire précédant stocké dans le RAM 26.

A l'instant t₁, par exemple, les unités binaires associées aux électrodes B et C dans le mot binaire actuel sont dans l'état haut tandis que les unités binaires correspondant dans le mot binaire précédent sont dans l'état bas. Ainsi, un signal correspondant à l'électrode B et ensuite un signal correspondant à l'électrode C sont fournis au créateur de chaînes d'identification 28.

A l'instant t₂, les unités binaires associées aux électrodes B, C et F dans le mot binaire actuel sont dans l'état haut. Toutefois, les unités binaires correspondant aux électrodes B et C dans le mot binaire précédent sont dans l'état haut et seule l'unité binaire correspondant à l'électrode F dans le mot binaire précédent est dans l'état bas. Dans ce cas, un signal correspondant à l'électrode F est fourni au créateur de chaînes d'identification 28 après l'instant t₂.

La figure 8 est un tableau dans lequel les symboles "$" représentent les électrodes pour lesquels, d'une part, l'unité binaire correspondante est dans l'état haut dans le mot binaire actuel, et d'autre part, l'unité binaire correspondante dans le mot binaire précédant est également dans l'état haut correspondant à un des symboles des électrodes A à S dans le tableau de figure 7 qui ont été remplacés par des symboles "$". Dans ces conditions, aucun signal d'identification n'est fourni au créateur de chaînes d'identificateurs pour ces unités binaires. Par exemple, on voit sur la figure 7 que seule un signal correspondant à l'électrode E et ensuite un signal correspondant à l'électrode J sont fournis au créateur de chaînes d'identification 28 après l'instant t₄.

En conséquence, la série de signaux reçue par le créateur de chaînes d'identificateurs 28 lors de l'inscription du chiffre "4", montré à la figure 4, identifie successivement les électrodes suivantes :
Symbole 4
B C F E J I N M Q R O P S K O R S

Ces identificateurs sont enregistrés les uns après les autres dans la mémoire RAM 26 afin de créer une série d'identificateurs correspondant au caractère inscrit. Ensuite, le comparateur 29 compare cette série d'identificateurs aux séries d'identificateurs de référence qui sont déjà stockés dans la mémoire RAM 27 afin d'identifier le caractère écrit.

Ces séries d'identificateurs de référence sont, de préférence, stockés dans la mémoire RAM 27 au cours d'un mode d'apprentissage. Dans un tel mode l'utilisateur peut, par exemple, inscrire sur le verre 3 de la montre 1 un caractère de référence. La série d'identificateurs engendrée par l'utilisateur peut être stockée dans la mémoire RAM 27 comme série d'identificateurs de référence. De préférence, plusieurs exemples de chaque caractère de référence seront inscrits par l'utilisateur et on fera la moyenne des séries d'identificateurs ainsi produites avant de stocker le résultat dans la mémoire RAM 27.

Enfin, il est à noter que plusieurs modifications peuvent être apportées au dispositif d'identification et au procédé d'identification selon l'invention sans sortir du cadre de celle-ci. Par exemple, bien que des capteurs capacitifs ont été prévus dans les modes de réalisation décrits ci-dessus, tout autre capteur capable de détecter l'absence ou la présence d'un instrument d'écriture dans des zones discrètes d'une surface d'écriture peuvent être utilisés.

## Revendications

1. Dispositif d'identification d'un caractère transcrit par un instrument d'écriture sur une surface, dispositif comprenant :
- une pluralité de capteurs (21;A-S), chacun d'eux produisant un signal de sortie ayant soit un premier état soit un deuxième état selon respectivement l'absence ou la présence dudit instrument d'écriture (13) dans une zone discrète de ladite surface;
- des moyens (23,24) pour détecter, périodiquement lors de la transcription dudit caractère, l'état desdits signaux de sortie; et
- des moyens (25) pour déterminer lesquels parmi lesdits signaux de sortie se trouvent dans ledit deuxième état à chaque détection d'état;
ledit dispositif étant caractérisé en ce qu'il comprend en outre :
- des moyens (25,26) pour comparer chacun desdits signaux de sortie se trouvant dans ledit deuxième état au signal de sortie qui avait été produit par le même capteur lors de la détection d'état précédente;
- des moyens (26,28) pour enregistrer, selon un ordre prédéterminé desdits capteurs, un identificateur correspondant aux capteurs pour lesquels un changement d'état a ainsi été détecté, lesdits identificateurs enregistrés formant ainsi une série d'identificateurs correspondant audit caractère transcrit; et
- des moyens (27,29) pour comparer ladite série d'identificateurs enregistrée à au moins une série d'identificateurs de référence afin d'identifier ledit caractère transcrit.

2. Montre comprenant un verre (3) caracterisée en ce qu'elle comprend un dispositif d'identification d'un caractère transcrit par un instrument d'écriture sur une surface selon la revendication 1,
ladite surface étant constituée par la surface extérieure dudit verre (3).

3. Procédé d'identification d'un caractère transcrit par un instrument d'écriture sur une surface, à l'aide une pluralité de capteurs (21;A-S), chacun d'eux produisant un signal de sortie ayant, soit un premier état, soit un deuxième état selon respectivement l'absence ou la présence dudit instrument d'écriture (13) dans une zone discrète de ladite surface, ledit procédé comprenant les étapes :
- lors de la transcription dudit caractère, détecter périodiquement (S1) l'état desdits signaux de sortie; et
- à chaque détection de l'état, déterminer lesquels parmi lesdits signaux de sortie se trouvent dans ledit deuxième état (S6);
ledit procédé étant caractérisé en ce qu'il comprend en outre les étapes de :
- comparer (S7) chacun desdits signaux de sortie se trouvant dans ledit deuxième état au signal de sortie produit par le même capteur à la détection d'état précédente;
- enregistrer (S8), selon un ordre prédéterminé desdits capteurs, un identificateur correspondant aux capteurs pour lesquels un changement d'état a ainsi été déterminé, lesdits identificateurs enregistrés formant ainsi une séries d'identificateurs correspondant audit caractère transcrit; et
- comparer (S12) ladite série d'identificateurs enregistrés à au moins une série d'identificateurs de référence afin d'identifier ledit caractère transcrit.

## Patentansprüche

1. Vorrichtung zum Identifizieren eines mittels eines Schreibinstruments auf einer Oberfläche transskribierten Zeichens, welche Vorrichtung umfaßt:
- eine Mehrzahl von Sensoren (21; A-S), von denen jeder ein Ausgangssignal mit einem ersten oder einem zweiten Zustand je nach Absenz oder Präsenz des Schreibinstruments (13) in einer diskreten Zone der Oberfläche abgibt,
- Mittel (23, 24) zum periodischen Erfassen des Zustands der Ausgangssignale während der Transskription des Zeichens, und
- Mittel (25) zum Bestimmen derjenigen der Ausgangssignale, die sich bei jeder Zustandserfassung in dem zweiten Zustand befinden, welche Vorrichtung dadurch gekennzeichnet ist, daß sie ferner umfaßt:
- Mittel (25, 26) zum Vergleichen jedes im zweiten Zustand befindlichen Ausgangssignals mit dem Ausgangssignal, das von demselben Sensor bei der vorhergehenden Zustandserfassung erzeugt worden war,
- Mittel (26, 28) für das Registrieren in einer vorbestimmten Ordnung der Sensoren eines Identifikators entsprechend den Sensoren, bei denen so eine Zustandsänderung erfaßt worden ist, welche registrierten Identifikatoren so eine Serie von Identifikatoren entsprechend dem transskribierten Zeichen bilden, und
- Mittel (27, 29) zum Vergleichen der Serie von registrierten Identifikatoren mit mindestens einer Referenz-Serie von Identifikatoren, um das transskribierte Zeichen zu identifizieren.

2. Armbanduhr mit einem Uhrglas (3), dadurch gekennzeichnet, daß sie eine Identifikationsvorrichtung eines mittels eines Schreibinstruments auf einer Oberfläche transskribierten Zeichens nach Anspruch 1 umfaßt, welche Oberfläche von der Außenoberfläche des Uhrglases (3) gebildet ist.

3. Verfahren zum Identifizieren eines mittels eines Schreibinstruments auf einer Oberfläche transskribierten Zeichens mit Hilfe einer Mehrzahl von Sensoren (21; A-S), von denen jeder ein Ausgangssignal mit entweder einem ersten Zustand oder einem zweiten Zustand je nach Absenz bzw. Präsenz des Schreibinstruments (13) in einer diskreten Zone der Oberfläche erzeugt, welches Verfahren die Schritte umfaßt:
- periodisches Erfassen (S1) des Zustands der Ausgangssignale während der Transskription des Zeichens, und
- Bestimmen, bei jeder Zustandserfassung, welche der Ausgangssignale sich in dem zweiten Zustand befinden (S6), welches Verfahren dadurch gekennzeichnet ist, daß es ferner die Schritte umfaßt:
- Vergleichen (S7) jedes im zweiten Zustand befindlichen Ausgangssignals mit dem von demselben Sensor bei der vorhergehenden Zustandserfassung erzeugten Ausgangssignal,
- Registrieren (S8) in einer vorbestimmten Ordnung der Sensoren eines Identifikators entsprechend den Sensoren, für die eine Zustandsänderung so bestimmt worden ist, welche registrierten Identifikatoren so eine dem transskribierten Zeichen entsprechende Serie von Identifikatoren bilden, und
- Vergleichen (S12) der Serie registrierter Identifikatoren mit mindestens einer Referenz-Serie von Identifikatoren, um um das transskribierte Zeichen zu identifizieren.

## Claims

1. Arrangement for the identification of a character transcribed onto a surface by a writing instrument, such arrangement comprising :
- a plurality of sensors (21; A-S), each of them producing an output signal having either a first state or a second state respectively according to the absence or the presence of said writing instrument (13) in a discrete zone of said surface;
- means (23, 24) for detecting periodically the state of said output signals during the transcription of said character; and,
- means (25) for determining which, among said output signals are in said second state at each detection of state;
said arrangement being characterized in that it furthermore comprises :
- means (25, 26) for comparing each of said output signals found in said second state with the output signal which had been produced by the same sensor during the preceding detection of state;
- means (26, 28) for storing, according to a predetermined order of said sensors, an identifier corresponding to the sensors for which a change of state has thus been detected, said stored identifiers thus forming a sequence of identifiers corresponding to said transcribed character; and
- means (27, 29) for comparing said sequence of stored identifiers with at least one sequence of reference identifiers in order to identify said transcribed character.

2. Watch comprising a crystal (3) characterized in that it comprises an arrangement for the identification of a character transcribed by a writing instrument on a surface according to claim 1, said surface being constituted by the outer surface of said crystal (3).

3. Method of identification of a character transcribed by a writing instrument on a surface, with the help of a plurality of sensors (21; A-S), each of them producing an output signal having either a first state or a second state respectively according to the absence or the presence of said writing instrument (13) in a discrete zone of said surface, said method comprising the steps of:
- periodically detecting (S1) the state of said output signals during the transcription of said character; and
- determining at each detection of the state which, among the output signals, is in said second state (S6); said method being characterized in that it furthermore comprises the steps of :
- comparing (S7) each of said output signals being in said second state with the output signal produced by the same sensor at the detection of the preceding state;
- storing (S8), according to a predetermined order of said sensors, an identifier corresponding to the sensors for which a change of state has thus been determined, said stored identifiers thus forming a sequence of identifiers corresponding to said transcribed character; and
- comparing (S12) said sequence of stored identifiers with at least one sequence of reference identifiers in order to identify said transcribed character.
